# EUROPEAN PATENT APPLICATION

(11) **EP 4 096 106 A1**
(43) Date of publication of application: **30.11.2022**
(21) Application number: 22169869.9
(22) Date of filing: 25.04.2022
(51) Int. Cl.: H04B 5/00, H04B 5/02, G06K 7/10, G06K 19/06

(54) **METHOD FOR DIGITAL WIRELESS COMMUNICATION THROUGH A BARRIER MADE OF CONDUCTIVE MATERIAL, SYSTEM FOR PERFORMING SUCH COMMUNICATION, AND SYSTEM FOR MONITORING CYLINDER CONTENT**

(30) Priority: 25.05.2021 EP 21175775
(71) Applicant: Aiut Sp. z o.o., 44-109 Gliwice (PL)
(72) Inventor: Gabrys, Marek, 44-109 Gliwice (PL); Frankiewicz, Artur, 44-109 Gliwice (PL)
(74) Representative: AOMB Polska Sp. z.o.o.

(57) **Abstract**

The subject of the present invention is a method and a system for measuring a level of liquid inside of a hermetically closed container for pressurized liquid gas, such as LPG (liquefied petroleum gas) or LNG (liquified natural gas), utilizing a fluid level sensor, such as a microwave fluid level sensor or an optical time of flight level sensor.

## Description

### TECHNICAL FIELD

The present invention generally relates to the field of containers for storing liquid products, and to measuring devices for determining and monitoring a fill level of a product stored inside a metal container by means of a electromagnetic beam transit time measuring method inside of hermetically closed container made of metal. More specifically, the subject matter of the present invention is a method and a system for measuring a level of liquid inside of a hermetically closed container for pressurized liquid gas, such as LPG (liquefied petroleum gas) or LNG (liquified natural gas), utilizing a fluid level sensor (a microwave fluid level sensor or an optical time of flight level sensor).

### BACKGROUND ART

Various devices for monitoring and measuring a fill level of a liquid medium in a container are presently known. These are for example mechanical float level indicators, magnetostrictive probes, ultrasound sensors and radar (microwave) tank gauges.

Each of these known devices has some drawbacks. Some of them have mechanical movable parts that can be jammed or do not work accurately on low liquid level. Others are difficult to be installed or replaced on a container since they require degasification of the tank or are expensive.

Known radar tank gauge operates on the principle of a microwave transit time measuring method for determining the fluid level in a container. The filling level of the medium in a container is determined based on the transit time of the measurement signal being a distance between microwaves transmitted via an antenna towards the surface of the medium and microwaves reflected on the surface of the medium and received by a transceiver.

Known radar tank gauges that operate on containers made of metal require a hole in the container in order to install the sensor on the tank. Installing such a known gauge inside such e container does not make sense due to lack of communication of the gauge with outside of the container.

WO 2003/046491 A1 discloses an antenna for level measurement to be protected from aggressive chemical media and high temperatures by at least partial filling with a dielectric material or a disk-shaped dielectric element.

The European patent application no. EP 21175775.2, to which the present invention relates, allows to overcome the problem of lack of communication between a microwave fluid level sensor located inside of hermetically closed container made of metal and the outside of the container. The invention relates generally to digital wireless communication through a barrier made of a conductive material. More specifically, the invention relates to a method and system for performing such communication, enabling communication with devices placed inside a sealed container, preferably made of metal, using a slowly varying magnetic field.

### SUMMARY OF THE INVENTION

The objective of the present invention is to provide a very accurate solution for measuring a fill level of a liquid medium in a closed container which eliminates the above-indicated drawbacks.

According to the first aspect of the present invention there is provided a method for measuring a level of liquid inside a hermetically closed container for pressurized liquid gas, such as LPG or LNG, wherein said container is made of a conductive material, preferably metal, such as steel. Due to electromagnetically properties of a steel it is not possible to utilize the sensor outside the container.

The container does have any wholes or leads to allow installation of the sensor on the outside of the container therefore the sensor is installed inside a container. The container keeps high pressure tolerance due to full-metal construction.

According to the inventive method, a fluid level sensor which is placed inside the container performs measurements of the level of liquid inside the container as follows: The fluid level sensor emits a microwave beam towards the inside of the container. A part of the emitted microwave beam gets back after reflection from the surface of the liquid in the container. The fluid level sensor receives back that part of the signal - reflected from the surface of the liquid. By calculating time difference or frequency difference between the emitted beam and the beam reflected from the surface of the liquid inside the container and received back by the fluid level sensor, one can estimate the level of the liquid. Based on this estimation a fill level of the liquid can be determined. The fluid level sensor may be configured and programmed for performing such estimations.

The fluid sensor level may be a microwave fluid sensor level, emitting and receiving a microwave beam or an optical time of flight sensor.

Next, the results of measurements made by the sensor have to be transmitted outside the container.

For that purpose, the sensor communicates with external communication device using method described in the aforementioned European patent application no. EP21175775.2 keeping therefore ability to read on the outside liquid level inside the container.

Said method for digital wireless communication through a barrier made of a conductive material, preferably metal, consisting in transmission of encoded digital information using a transmitter, by generation of a static magnetic field with a stepwise variable spatial orientation of the magnetic induction vector on the first side of the barrier, then reading the resulting spatial orientation of the magnetic induction vector on the second side of the barrier using at least one spatial orientation sensor of the magnetic induction vector located in the receiver, and subsequently decoding the digital information from the stepwise variable spatial orientation of the magnetic induction vector by using a reading system connected to the receiver, the method comprising the following steps:
a. generation of a static magnetic field with the first spatial orientation of the magnetic induction vector by the first induction coil by exciting it with a current of the first constant intensity value on the first side of the barrier;
b. reading, with the receiver, the first resulting spatial orientation of the magnetic induction vector of the static magnetic field produced by at least one induction coil, which the first resulting spatial orientation of the magnetic induction vector of the static magnetic field is additionally distorted by the barrier as well as the Earth's magnetic field and magnetic objects in the vicinity of the communication path on the second side of the barrier;
c. assigning the first digital value in the reading system connected to the receiver to the first resulting spatial orientation of the magnetic induction vector of the static magnetic field;
d. generation of a static magnetic field with the second resulting spatial orientation of the magnetic induction vector of the static magnetic field by changing the static magnetic field produced by the induction coil by changing the first value or polarity of the excitation current of the first coil;
e. reading, with the receiver, the second resulting spatial orientation of the magnetic induction vector of the static magnetic field produced by at least one induction coil, which the second resulting spatial orientation of the magnetic induction vector of the static magnetic field is additionally distorted by the barrier as well as the Earth's magnetic field and magnetic objects in the vicinity of the communication path on the second side of the barrier;
f. assigning the second digital value in the reading system connected to the receiver to the second resulting spatial orientation of the magnetic induction vector of the static magnetic field;
g. encoding the digital information as a sequence of combinations of the first or the second resulting spatial orientation of the magnetic induction vector of the static magnetic field by the transmitter;
h. reading the combination of the first or the second resulting spatial orientation of the induction vector of the static magnetic field by the receiver and decoding the digital information by the reading system connected to the receiver.

Further detailed aspects and preferred embodiments of the method are explained in EP21175775.2.

A sensor that is installed inside of the container has to be able to work under very high ambient pressure, therefore has to be fully sealed, e.g. with epoxy resin or similar substance which is not affected by high ambient pressure and temperature..

Throughout the disclosure of the present invention, allows to obtain very high precision measurement by the sensor inside the container and ability to read the measured value by the device installed outside the container. The container keeps high pressure tolerance due to full steal construction.

### BRIEF DESCRIPTION OF THE DRAWINGS

The present invention will now be discussed in more details with reference to the attached drawings, in which:

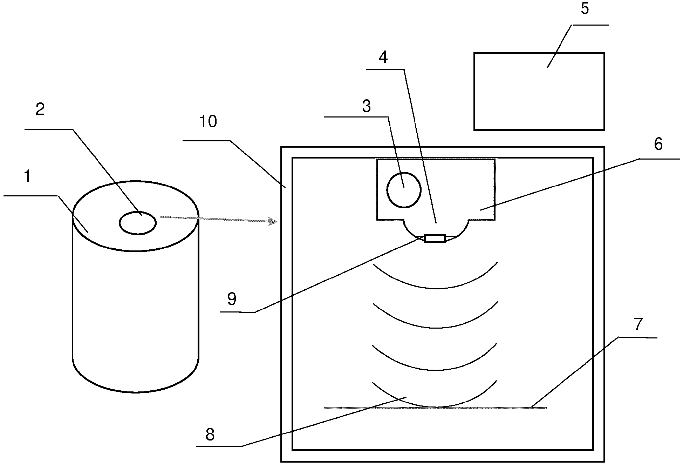

FIG. 1 is an schematic view of a liquid level measuring system according to the preferred embodiment of the present invention.

The following reference numerals are used:
1 - metal container / container
2 - device mounted on the outside of the container
3 - battery
4 - Microwave Time of Flight sensor
5 - External communication device
6 - Communication via metal barrier according to EP21175775.2
7 - radio wave reflected from the liquid level
8 - reflected radio signal
9 - microvawe lens
10 - container wall

### DETAILED DESCRIPTION OF THE PREFERRED EMBODIMENTS

Tanks for storing fluids like petrol and other flammable products are in general metal containers which are tightly sealed for not allowing any vapors going out of the container and not allowing any substances going into the container. Some flammable products are stored under pressure which means the pressure in the container is higher than the pressure outside the container.

Fig. 1 shows a liquid level measuring system according to a preferred embodiment of the present invention. A container 1 is a metal tank for storing pressurized liquid gas, such as LPG (liquefied petroleum gas) or LNG (liquified natural gas). The information about the amount of a stored liquid is crucial while usage as the gas is valuable. A sudden gas level drop might also indicate a leakage of the gas in a storage or delivery system. A microwave fluid level sensor 4 is mounted inside of a container. The container is hermetically closed and it is made of a conductive material, preferably of metal. The microwave fluid level sensor 4 emits a microwave beam towards the inside of the container 1. A part of the emitted microwave beam gets back after reflection from the surface 7 of the liquid in the container. The microwave fluid level sensor 4 receives back that part of the signal - reflected from the surface of the liquid.

By calculating time difference or frequency difference between the emitted microwave beam and the microwave beam reflected from the surface of the liquid inside the container 1 and received back by the microwave fluid level sensor 4, one can estimate the level of the liquid. Based on this estimation a fill level of the liquid can be determined. The microwave fluid level sensor 4 may be configured and programmed for performing such estimations.

In the preferred embodiment the microwave fluid level sensor 4 is capable to receive all reflected beams (that is beams reflected from different surfaces including the gas surface) and select only the beam reflected from the surface of the liquid stored in the container 1 for measuring the level of the liquid. Algorithms for selection of the right beam based on signal analyze algorithms like FFT (Fast Fourier Transformation) and/or adaptive algorithms based on machine learning algorithms can be used.

For transmitting the results of measurements made by the sensor 4 to the outside of the container 1, the sensor 4 communicates by its internal communication means with an external communication device using method described in the aforementioned European patent application no. EP21175775.2 and briefly described above.

## Claims

1. A method for measuring a level of liquid inside a hermetically closed container for pressurized liquid gas, such as LPG or LNG, wherein said container is made of a conductive material, preferably metal, such as steel, using a fluid sensor level located fully and closed inside the container, wherein in said method the fluid level sensor emits a beam towards the surface of the liquid inside the container, a part of the emitted beam gets back after reflection from the surface of the liquid in the container, the fluid level sensor receives back that part of the beam and by calculating time difference or frequency difference between the emitted beam and the beam reflected from the surface of the liquid inside the container and received back by the fluid level sensor, the level of the liquid inside the container is estimated, wherein the result of the estimation is transmitted to the outside of the container by digital wireless communication through a barrier made of a conductive material, preferably metal, consisting in transmission of encoded digital information using a transmitter, by generation of a static magnetic field with a stepwise variable spatial orientation of the magnetic induction vector on the first side of the barrier, then reading the resulting spatial orientation of the magnetic induction vector on the second side of the barrier using at least one spatial orientation sensor of the magnetic induction vector located in the receiver, and subsequently decoding the digital information from the stepwise variable spatial orientation of the magnetic induction vector by using a reading system connected to the receiver, said digital wireless communication comprising the following steps:
a. generation of a static magnetic field with the first spatial orientation of the magnetic induction vector by the first induction coil by exciting it with a current of the first constant intensity value on the first side of the barrier;
b. reading, with the receiver, the first resulting spatial orientation of the magnetic induction vector of the static magnetic field produced by at least one induction coil, which the first resulting spatial orientation of the magnetic induction vector of the static magnetic field is additionally distorted by the barrier as well as the Earth's magnetic field and magnetic objects in the vicinity of the communication path on the second side of the barrier;
c. assigning the first digital value in the reading system connected to the receiver to the first resulting spatial orientation of the magnetic induction vector of the static magnetic field;
d. generation of a static magnetic field with the second resulting spatial orientation of the magnetic induction vector of the static magnetic field by changing the static magnetic field produced by the induction coil by changing the first value or polarity of the excitation current of the first coil;
e. reading, with the receiver, the second resulting spatial orientation of the magnetic induction vector of the static magnetic field produced by at least one induction coil, which the second resulting spatial orientation of the magnetic induction vector of the static magnetic field is additionally distorted by the barrier as well as the Earth's magnetic field and magnetic objects in the vicinity of the communication path on the second side of the barrier;
f. assigning the second digital value in the reading system connected to the receiver to the second resulting spatial orientation of the magnetic induction vector of the static magnetic field;
g. encoding the digital information as a sequence of combinations of the first or the second resulting spatial orientation of the magnetic induction vector of the static magnetic field by the transmitter;
h. reading the combination of the first or the second resulting spatial orientation of the induction vector of the static magnetic field by the receiver and decoding the digital information by the reading system connected to the receiver.

2. The method according to claim 1 **characterised in that** the resulting spatial orientation of the magnetic induction vector of the static magnetic field is generated using at least two axially non-parallel oriented coils by independent current excitation thereof.

3. The method according to claim 2 **characterised in that** the digital information is encoded with more than two resulting spatial orientations of the magnetic induction vector of the static magnetic field.

4. The method according to claim 2 or 3 **characterised in that** the spatial orientation of the magnetic induction vector of the static magnetic field is measured in at least two geometric dimensions.

5. The method according to any one of claims from 1 to 4 **characterised in that** the encoded digital information is assigned to a particular resulting spatial orientation of the magnetic induction vector of the static magnetic field.

6. The method according to any one of claims from 1 to 5 **characterised in that** the encoded digital information is assigned to a particular sequence of at least two different resulting spatial orientations of the magnetic induction vector of the static magnetic field.

7. The method according to any one of claims from 1 to 6 **characterised in that** the reading of the spatial orientation of the magnetic induction vector of the static magnetic field is performed with the use of highly precise MEMS, Hall or magnetostrictive type sensors of spatial orientation of the static magnetic field.

8. The method according to any one of claims from 1 to 7, wherein a microwave fluid sensor level, emitting and receiving a microwave beam, or an optical time of flight sensor is used as the fluid sensor level.

9. A system for measuring a level of liquid inside a hermetically closed container, comprising:
a container for pressurized liquid gas, such as LPG or LNG, wherein said container is made of a conductive material, preferably metal, such as steel;
a fluid sensor level, located fully inside the hermetically closed container and configured to emit a beam towards the surface of the liquid inside the container and to receive a beam reflected from the surface of the liquid inside the container;
computation means configured and programmed for estimating the level of the liquid inside the container by calculating time difference or frequency difference between the emitted beam and the beam reflected from the surface of the liquid inside the container;
internal communication means, located inside the container;
external communication means, located outside the container;
wherein the internal communication means and the external communication means are configured for transmitting the estimated level of liquid inside the container from the internal communication means to the external communication means by the digital wireless communication according to any one of the claims 1 to 8.

10. The system according to claim 9, wherein the fluid sensor level 4 is a microwave fluid sensor level, emitting and receiving a microwave beam, or an optical time of flight sensor.
